# FASCICULE DE BREVET EUROPEEN

(11) **EP 1 200 280 B1**
(45) Date de publication et mention de la délivrance du brevet: **07.02.2007**
(21) Numéro de dépôt: 01938302.5
(22) Date de dépôt: 22.05.2001
(51) Int. Cl.: B60J 10/08, B60J 10/00

(54) **JOINT POUR ENCADREMENT D'OUVERTURE DE VEHICULE AUTOMOBILE**
DICHTUNGSPROFILLEISTE FÜR EINE ÖFFNUNG EINES KRAFTFAHRZEUGES
SEAL FOR MOTOR VEHICLE OPENING FRAME

(30) Priorité: 26.05.2000 FR 0006731
(43) Date de publication de la demande: 02.05.2002
(73) Titulaire: Metzeler Automotive Profile Systems Transieres, 92000 Nanterre (FR)
(72) Inventeur: DRON, Bernard, F-92800 Puteaux (FR)
(74) Mandataire: Jolly, Jean-Pierre
(86) Numéro de dépôt international: PCT/FR2001/001577
(87) Numéro de publication internationale: WO 2001/092044

(56) Documents cités:
- EP-A- 0 622 261
- WO-A-01/74616
- DE-A- 1 553 552
- DE-A- 3 018 213
- US-A- 5 361 542
- US-A- 5 819 472
- PATENT ABSTRACTS OF JAPAN vol. 011, no. 183 (M-598), 12 juin 1987 (1987-06-12) & JP 62 012416 A (TOKAI KOGYO KK), 21 janvier 1987 (1987-01-21)
- PATENT ABSTRACTS OF JAPAN vol. 012, no. 416 (M-759), 4 novembre 1988 (1988-11-04) & JP 63 151556 A (KINUGAWA RUBBER IND CO LTD), 24 juin 1988 (1988-06-24)

## Description

La présente invention a pour objet un nouveau joint pour encadrement d'ouverture de véhicule automobile, notamment pour encadrement de porte, de coffre, de hayon, de vitre, de custode, ou autre.

De tels joints pour encadrements d'ouvertures de véhicules automobiles comprennent généralement :
- un profilé formant pince à section en U, en élastomère ou en plastomère, comportant habituellement une armature rigide et destiné à coiffer et pincer une partie de l'encadrement de l'ouverture de la carrosserie de l'automobile ;
- et au moins un profilé tubulaire en un matériau déformable élastiquement, généralement un matériau cellulaire, attenant par exemple à une branche latérale ou à la base du profilé à section en U et faisant saillie vers l'extérieur à partir de l'encadrement de l'ouverture, en vue d'être comprimé entre l'ouvrant et cet encadrement, en position de fermeture de l'ouvrant, pour assurer l'étanchéité du véhicule.

Le profilé à section en U et le profilé tubulaire sont habituellement en des matériaux thermoplastiques ou élastomériques et sont réalisés par coextrusion.

Outre son rôle d'organe d'étanchéité, lorsqu'il est comprimé par l'ouvrant, en position de fermeture de celui-ci, le profilé tubulaire a aussi une fonction d'insonorisation de l'habitacle du véhicule.

De nombreuses formes de réalisation de tels joints sont connues dans la technique et toutes visent généralement à assurer une excellente insonorisation, sans trop altérer l'aptitude à la déformation du profilé tubulaire.

Dans le document WO-A-0174616 qui correspond à la demande de brevet français N° 00 04114, déposée le 31 Mars 2000 publié le 11 octobre 2001 et non encore publiée à la date de dépôt de la présente demande, la Demanderesse a proposé un joint du même type général que ceux mentionnés ci-dessus, mais qui, contrairement à ceux de la technique antérieure, qui visaient à avoir une excellente aptitude à la déformation, oppose localement une résistance accrue à la compression de l'ouvrant lors de la fermeture de celui-ci.

En effet, lorsque des portes d'automobile sont fortement galbées, elles tendent à se déformer lorsque le véhicule roule à des vitesses élevées, sous l'effet d'une dépression externe, et il est important de pouvoir s'opposer à cette déformation. Avec un joint opposant une résistance accrue à la fermeture des portes, celles-ci, après fermeture, sont soumises à une précontrainte, qui leur permet de mieux résister aux sollicitations externes à grande vitesse du véhicule.

Par ailleurs, pour certains coffres de véhicule, il est parfois nécessaire que, lors de la fermeture de l'ouvrant, le joint de coffre lui oppose au moins localement une résistance suffisante pour servir d'amortisseur de fin de course, en évitant ainsi qu'il ne produise ultérieurement des vibrations.

Pour répondre à ces exigences, la Demanderesse a proposé, dans la demande de brevet précitée, un joint d'étanchéité pour encadrement d'ouverture d'une carrosserie de véhicule automobile, ce joint comprenant un premier profilé formant pince à section en U, en élastomère ou en plastomère, apte à venir coiffer en la serrant une partie saillante de l'encadrement d'ouverture, et un second profilé à section en U, en un matériau déformable élastiquement, disposé latéralement par rapport au premier profilé, avec les extrémités de ses branches attenantes à l'une des ailes ou à la base de ce premier profilé, de manière à former avec cette aile un organe tubulaire, ce second profilé comprenant au moins un orifice qui met en communication l'intérieur et l'extérieur du profilé et étant destiné à être comprimé élastiquement par l'ouvrant associé à l'ouverture de la carrosserie, en position de fermeture de cet ouvrant, pour assurer l'étanchéité au niveau de l'encadrement, ce joint étant caractérisé en ce qu'à l'intérieur du second profilé et suivant une partie au moins de la longueur de celui-ci est logé un troisième profilé à section en U, de dimensions réduites par rapport à celles du second profilé et dont les extrémités des branches sont également attenantes à la même aile ou à la base du premier profilé, ce troisième profilé étant également en un matériau déformable élastiquement et étant destiné à opposer une résistance locale à l'effort de compression exercé par l'ouvrant, tout en renforçant l'étanchéité et l'insonorisation au niveau de l'encadrement de l'ouverture.

Comme le second profilé, le troisième profilé de ce joint peut être percé d'au moins un orifice mettant en communication l'intérieur et l'extérieur du profilé. Il peut aussi être dépourvu d'un tel orifice, pour certaines applications du joint.

Le troisième profilé de ce joint antérieur a par conséquent une triple fonction :
- opposer une résistance accrue à la fermeture de l'ouvrant ;
- servir d'amortisseur en fin de course de cet ouvrant, lorsque celui-ci arrive en position de fermeture ;
- s'opposer au passage des ondes sonores et assurer ainsi une meilleure insonorisation de l'habitacle du véhicule, lorsqu'il est comprimé par l'ouvrant.

Le document le plus proche US-A-5 361 542 décrit un joint d'étanchéité pour encadrement d'ouverture d'une carrosserie de véhicule automobile, ce joint comprenant
- un premier profilé formant pince à section en U, en élastomère ou en plastomère, apte à venir coiffer en la serrant une partie saillante de l'encadrement,
- un second profilé en un matériau souple déformable élastiquement, ce second profilé étant attenant à la face externe de la base ou de l'une des branches du premier profilé et formant à lui seul ou avec la partie du premier profilé à laquelle il est attenant un organe tubulaire,
- au moins un orifice mettant en communication l'intérieur et l'extérieur de ce second profilé,
- le second profilé étant destiné à être comprimé par l'ouvrant associé à l'ouverture de la carrosserie, en position de fermeture de cet ouvrant, pour assurer l'étanchéité au niveau de l'encadrement,
- un troisième profilé en un matériau souple déformable élastiquement, attenant ou non au premier profilé ou au second profilé et formant à lui seul ou avec la partie du premier et/ou du second profilé à laquelle il est attenant un organe tubulaire étanche, connecté à une source de vacuum et apte, sous la sollicitation de ce fluide à venir au contact de la face interne du second profilé.

La présente invention s'intéresse à un joint pour encadrement d'ouverture du même type général que celui qui vient d'être défini, c'est-à-dire comportant un troisième profilé en un matériau déformable élastiquement, logé à l'intérieur du second profilé, mais qui, à la différence du joint antérieur, contient non pas de l'air à la pression ambiante, mais est connecté à une source de fluide sous pression.

En effet, en poursuivant ses études sur ce type de joint, la Demanderesse s'est efforcée de répondre aux exigences suivantes :
- ne pas gêner la fermeture normale de l'ouvrant ;
- assurer une bonne étanchéité à l'arrêt et à basse vitesse du véhicule, c'est-à-dire à une vitesse où il n'y a guère de problèmes d'insonorisation, du fait du faible niveau des bruits extérieurs ;
- mais surtout assurer une excellente étanchéité à grande vitesse, lorsque les portes tendent à se déplacer vers l'extérieur sous l'effet d'une dépression, tout en accroissant l'insonorisation, pour répondre au niveau beaucoup plus élevé des bruits extérieurs.

Dans ce but, l'invention propose d'utiliser un troisième profilé, au sens donné ci-dessus à ce terme, qui, à lui seul ou avec d'autres constituants du joint, forme un volume clos étanche, connecté à une source de fluide sous pression, généralement un liquide, mais qui peut être aussi un gaz, de l'air par exemple, ce troisième profilé étant réalisé en un matériau très souple et très mou, qui lui permet de se dilater sous une faible surpression, pour venir au contact du second profilé dans lequel il est logé, afin de :
- créer une barrière additionnelle au passage des ondes sonores ;
- maintenir un contact satisfaisant du joint avec l'encadrement de porte et la porte elle-même, même lorsque celle-ci tend à s'écarter de l'encadrement, à grande vitesse du véhicule, avec un surécartement pouvant atteindre 3 mm environ, à la partie supérieure de la porte ;
- et même s'opposer à cette déformation, en repoussant vers l'extérieur la partie inférieure de la porte.

A cet effet, l'invention a pour objet un joint d'étanchéité pour encadrement d'ouverture d'une carrosserie de véhicule automobile, ce joint comprenant les caractéristiques de la revendication 1.

Comme indiqué ci-dessus, le troisième profilé est en un matériau très souple et de très faible dureté, par exemple d'environ 30 à 35 Shore A. L'utilisation d'un matériau aussi mou est autorisée par le fait que ce troisième profilé est logé dans le second profilé et est ainsi protégé des contacts extérieurs.

Ce troisième profilé peut être indépendant du deuxième profilé et être constitué par un insert engagé dans celui-ci, après que tous deux aient été fabriqués indépendamment.

De préférence, toutefois, le troisième profilé sera attenant au second profilé et fabriqué par coextrusion avec celui-ci et avec le premier profilé formant pince.

La pression du fluide alimentant le troisième profilé sera avantageusement réglable en fonction de la vitesse du véhicule, de manière à croître et décroître avec cette dernière, et elle pourra être commandée par effet venturi ou par une pompe. En effet, le profilé n'a pas besoin d'être soumis à une pression à l'arrêt ou à basse vitesse et c'est surtout à vitesse plus élevée, par exemple à partir de 80 km/h, que, lorsque l'ouvrant est soumis à une dépression externe et tend à s'écarter de l'encadrement de l'ouverture, la pression du fluide doit augmenter.

En cas de choc grave, lorsque le véhicule comporte des coussins gonflables de sécurité du type dit "air-bags", on peut naturellement prévoir avantageusement un système de sécurité, lié au moyen de déclenchement de ces "air-bags" pour supprimer simultanément toute pression dans le troisième profilé, par exemple par rupture ou perforation de celui-ci. Normalement, la décroissance de la pression du fluide liée à la diminution de la vitesse du véhicule est suffisante à elle seule.

Lorsque ce troisième profilé n'est pas par lui-même un profilé tubulaire, il peut avoir une section transversale en U avec les extrémités des branches du U solidaires du second profilé ou, éventuellement, du premier profilé, si le second profilé est lui-même un profilé à section en U solidaire par ses branches du premier profilé.

Les dimensions et la position du troisième profilé sont naturellement choisies de manière qu'il ne s'oppose pas à la fermeture des portes.

Du fait de sa grande souplesse, il peut se dilater sous une faible surpression pour venir alors en contact avec le second profilé dans lequel il est logé, en créant ainsi une barrière additionnelle au passage des ondes sonores et une réduction des vibrations, qui améliorent considérablement l'acoustique de l'habitacle du véhicule.

A grande vitesse du véhicule, lorsque l'ouvrant, une porte par exemple, tend à s'écarter de l'encadrement de l'ouverture associée, le troisième profilé continue à se dilater sous une pression accrue du fluide sous pression et à solliciter ainsi le second profilé de manière qu'il continue à obturer l'espace tendant à se créer entre l'ouvrant et l'encadrement et à le maintenir en contact avec eux, en s'opposant également sur une partie de sa longueur à cette déformation.

D'autres caractéristiques et avantages de l'invention apparaîtront dans la description détaillée qui va suivre de diverses formes de mise en oeuvre de celle-ci, dans son application à un joint de porte d'automobile.

Dans cette description, on se référera aux dessins schématiques annexés, sur lesquels :
La figure 1 est une coupe transversale d'une première forme de réalisation du joint, dans laquelle le troisième profilé, logé à l'intérieur du second profilé, est attenant à une branche latérale du premier profilé formant pince ;
La figure 2 est une vue schématique en élévation latérale de l'encadrement de porte associé au joint de la figure 1, illustrant l'alimentation en fluide sous pression du troisième profilé ;
La figure 3 est une coupe transversale d'une variante du joint de la figure 1, dans laquelle le troisième profilé est en le même matériau que le second profilé et fait corps avec celui-ci ;
La figure 4 est une coupe analogue à celle des figures 1 et 3 d'une troisième forme de réalisation du joint, dans laquelle le troisième profilé est constitué par un insert indépendant du second profilé, dans lequel il est logé ;
La figure 5 illustre une autre forme de réalisation du joint selon l'invention et un positionnement préféré de celui-ci entre une porte et la carrosserie du véhicule.

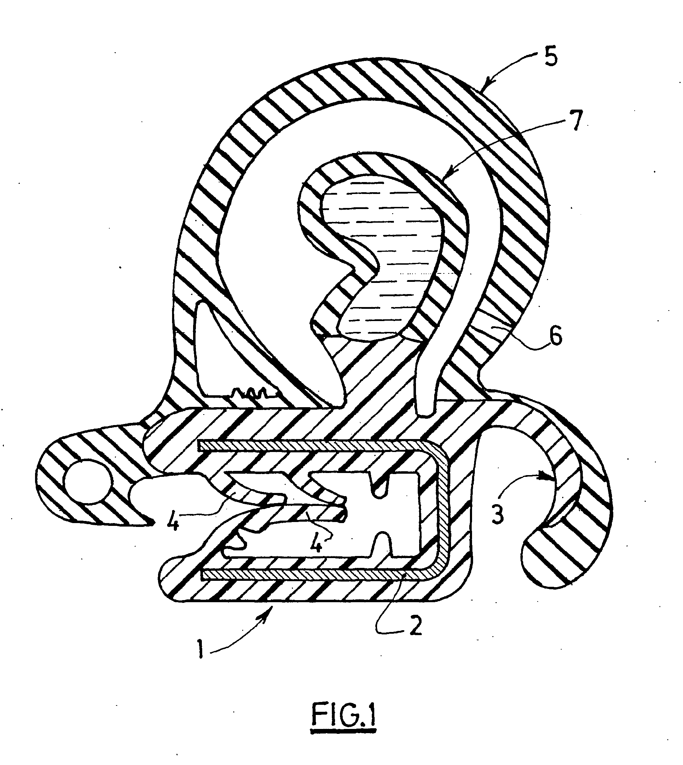

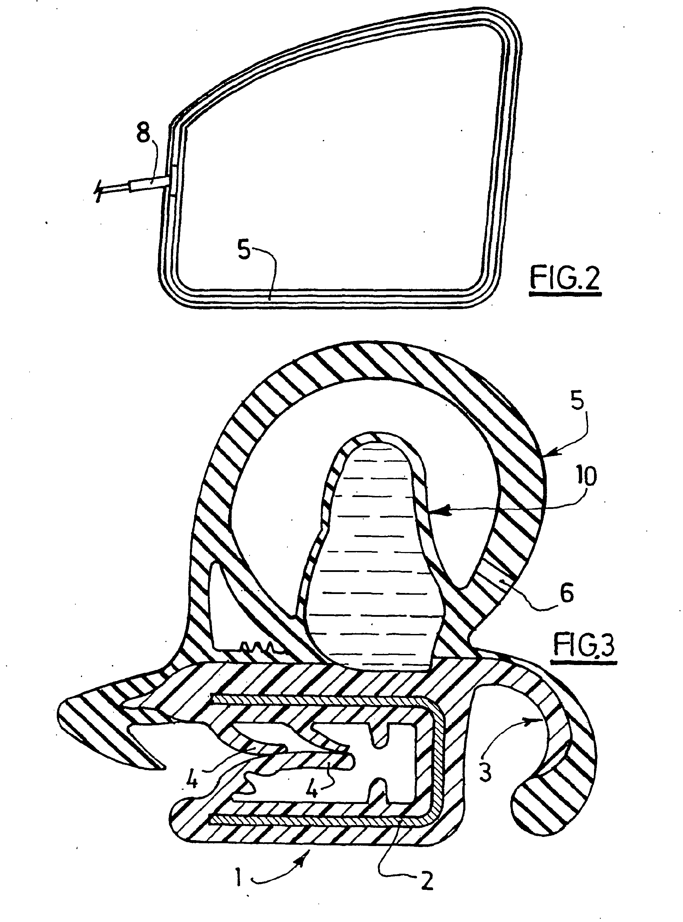

On se référera d'abord aux figures 1 et 2.

Le joint de porte représenté sur ces figures comprend un profilé 1 formant pince, à section en U, en élastomère ou en plastomère, équipé d'une armature métallique 2, également à section en U, qui est destiné à coiffer un bord saillant d'un encadrement de porte d'automobile. Une lèvre cosmétique 3, fait saillie latéralement à partir de la base du U, tandis que des lèvres 4 en un matériau souple tel qu'un élastomère font saillie à l'intérieur du U à partir des branches de celui-ci, en vue d'enserrer fermement le bord saillant de l'encadrement de porte.

Un second profilé 5 à section en U, par exemple en caoutchouc cellulaire, est attenant latéralement par les extrémités de ses branches à une aile du profilé 1 et il fait saillie vers l'extérieur du véhicule du côté opposé à la lèvre 3, en formant un organe tubulaire avec l'aile du profilé 1 à laquelle il est attenant. Ce profilé 5 est destiné à être comprimé et déformé entre l'encadrement de porte et cette porte, en position de fermeture de celle-ci, en vue d'assurer l'étanchéité de l'habitacle du véhicule et de l'insonoriser, et il peut être percé d'orifices 6, disposés à intervalles réguliers ou non le long du profilé, pour permettre le libre passage de l'air vers l'extérieur du profilé ou vers l'intérieur de celui-ci.

A l'intérieur du profilé 5 est logé un troisième profilé 7 à section en U, de plus petites dimensions, qui est attenant latéralement par l'extrémité des branches du U à une partie en saillie de la même aile du profilé 1 que le profilé 5. Il forme avec l'aile du profilé 1 à laquelle il est attenant un organe tubulaire étanche de section notablement inférieure à celle du profilé 5.

Conformément à l'invention, ce profilé 7 est connecté par un raccord en T 8 (voir figure 2) à une source d'un fluide qui peut être mis sous une pression variable, commandée en fonction de la vitesse du véhicule, par exemple à l'aide d'une pompe. Sous la sollicitation de ce fluide sous pression, par exemple de l'air ou de l'eau glycolée, le profilé 7, représenté au repos sur le dessin, c'est-à-dire sous très faible pression, peut se dilater pour venir au contact d'une partie de la face interne du profilé 5, de manière à améliorer les qualités d'insonorisation du joint et à maintenir le profilé 5 interposé entre l'encadrement de porte et la porte, au contact de ceux-ci, même à une grande vitesse du véhicule.

Pour pouvoir se dilater aisément, le profilé 7 sera en un matériau mou, d'une dureté comprise entre 30 et 35 Shore A. Il peut être par exemple en EPDM cellulaire ou compact ou, de préférence, en TPE.

La forme de réalisation de la figure 3, sur laquelle les organes déjà décrits sont désignés par les mêmes chiffres de référence que sur la figure 1, ne diffère de la forme de réalisation précédente que par le fait que le troisième profilé 10 fait corps avec le second profilé 5, mais, comme précédemment, il définit avec ce profilé 5 et le profilé 1 attenant à celui-ci un organe tubulaire étanche, qui est raccordé à la source de fluide sous pression.

Dans les deux formes de réalisation qui viennent d'être décrites, les premier, deuxième et troisième profilés peuvent être réalisés par une unique opération de coextrusion.

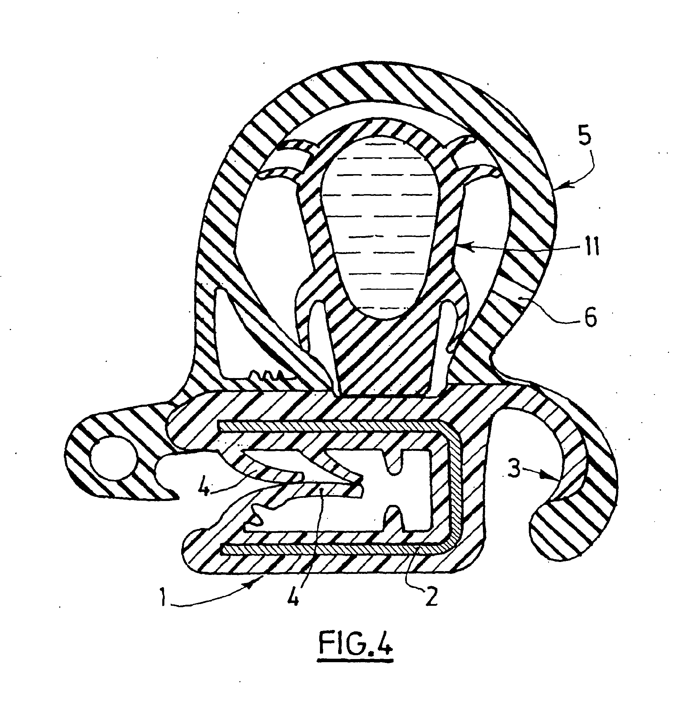

Sur la figure 4, les organes déjà décrits en référence aux figures précédentes sont à nouveau désignés par les mêmes chiffres de référence. Dans la forme de réalisation représentée sur cette figure, le troisième profilé 11, connecté à la source de fluide sous pression et logé dans le second profilé 5, n'est plus attenant à ce dernier, mais est fabriqué indépendamment de celui-ci, dans lequel il est introduit comme un insert. Il agit néanmoins de la même manière que les réalisations précédemment décrites et présente les mêmes avantages.

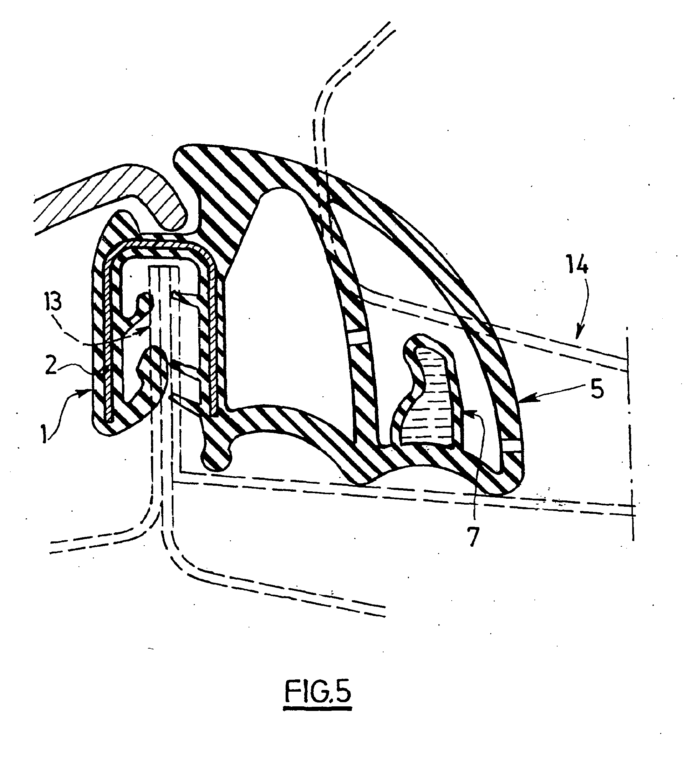

La figure 5, où les organes déjà décrits sont à nouveau désignés par les mêmes chiffres de référence, représente une autre forme de réalisation du joint conforme à l'invention, avec le profilé 1 formant pince en position d'utilisation sur la feuillure 13 constituant le bord saillant de l'encadrement de porte.

Dans cette forme de réalisation, le second et le troisième profilés 5 et 7 sont disposés de façon à être comprimés par la porte 14 du véhicule entre le panneau 15 de la carrosserie du véhicule, et un autre profilé tubulaire 16, séparé par une cloison 17 du profilé 5, est attenant à une branche du profilé 1 et interposé entre celui-ci et le profilé 5.

Dans toutes les formes de réalisation, le second et/ou le troisième profilés peuvent être revêtus localement, sur leur surface externe et/ou interne, d'une pellicule en un matériau différent de celui dont ils sont constitués, ou en le même matériau, mais avec des propriétés physiques différentes, de manière à former des barrières au passage des ondes sonores. Ces pellicules ne s'étendent de préférence que suivant une partie de la longueur et de la section transversale des profilés, de manière à ne perturber que localement et de façon minime leur aptitude à la déformation.

Dans toutes ses formes de réalisation, on notera la grande simplicité du joint d'étanchéité conforme à l'invention, qui peut être fabriqué aisément par des procédés bien connus de l'homme du métier.

## Revendications

1. Joint d'étanchéité pour encadrement d'ouverture d'une carrosserie de véhicule automobile, ce joint comprenant un premier profilé (1) formant pince à section en U, en élastomère ou en plastomère, apte à venir coiffer en la serrant une partie saillante de l'encadrement, et un second profilé (5) en un matériau souple déformable élastiquement, ce second profilé étant attenant à la face externe de la base ou de l'une des branches du premier profilé et formant à lui seul ou avec la partie du premier profilé à laquelle il est attenant un organe tubulaire, au moins un orifice (6) mettant en communication l'intérieur et l'extérieur de ce second profilé, celui-ci étant destiné à être comprimé par l'ouvrant associé à l'ouverture de la carrosserie, en position de fermeture de cet ouvrant, pour assurer l'étanchéité au niveau de l'encadrement, ce joint étant **caractérisé en ce qu'**à l'intérieur du second profilé (5) est logé un troisième profilé (7, 10, 11) en un matériau souple déformable élastiquement, attenant ou non au premier profilé (1) ou au second profilé (5) et formant à lui seul ou avec la partie du premier et/ ou du second profilé à laquelle il est attenant un organe tubulaire étanche, connecté à une source de fluide sous pression et apte, sous la sollicitation de ce fluide, à venir au contact de la face interne du second profilé (5) dans lequel il est logé, pour améliorer les propriétés d'étanchéité et d'insonorisation du joint, lorsque le véhicule se déplace à vitesse élevée, ce troisième profilé étant réalisé en un matériau très souple et très mou, qui lui permet de se dilater sous une faible surpression, pour venir au contact du second profilé dans lequel il est logé.

2. Joint selon la revendication 1, **caractérisé en ce que** le troisième profilé (7) n'est pas attenant au second profilé (5).

3. - Joint selon la revendication 1, **caractérisé en ce que** le troisième profilé (10) fait corps avec le second profilé (5).

4. - Joint selon l'une des revendication 1 à 3, **caractérisé en ce que** le second profilé (5) et le troisième profilé (7, 10) sont venus d'une coextrusion avec le premier profilé (1).

5. -Joint selon la revendication 1, **caractérisé en que** le troisième profilé (11) est un organe tubulaire fabriqué indépendamment du deuxième profilé (5) et engagé à l'intérieur de celui-ci.

6. - Joint selon l'une des revendications 1 à 5, **caractérisé en ce que** la source de fluide sous pression fournit ce fluide sous une pression qui croît avec la vitesse du véhicule.

7. Joint selon l'une des revendications 1 à 6, **caractérisé en ce que** le fluide sous pression est un gaz, notamment de l'air.

8. Joint selon l'une des revendications 1 à 6, **caractérisé en ce que** le fluide sous pression est un liquide, notamment de l'eau glycolée

## Claims

1. Seal for the surround of an opening in motor vehicle bodywork, this seal comprising a first section piece (1) forming a clip of U-shaped cross section, made of elastomer or of plastomer, capable of sitting over and gripping a projecting part of the surround, and a second section piece (5) made of an elastically deformable flexible material, this second section piece abutting the outside of the base or of one of the branches of the first section piece and forming, by itself or with the part of the first section piece that it abuts, a tubular member, at least one orifice (6) placing the inside and the outside of this second section piece in communication, this second section piece being intended to be compressed by the opening leaf associated with the opening in the bodywork, when this opening leaf is in the closed position, so as to seal at the surround, this seal being **characterized in that**, housed inside the second section piece (5) is a third section piece (7, 10, 11) made of an elastically deformable flexible material which may or may not abut the first section piece (1) or the second section piece (5) and which forms, by itself or with the part of the first and/or second section piece that it abuts, a sealed tubular member connected to a source of fluid under pressure and capable, under the urging of this fluid, of coming into contact with the interior face of the second section piece (5) in which it is housed in order to improve the sealing and soundproofing properties of the seal when the vehicle is moving at high speed, this third section piece being made of a very flexible and very soft material, which allows it to expand under a slight overpressure in order to come into contact with the second section piece in which it is housed.

2. Seal according to Claim 1, **characterized in that** the third section piece (7) does not abut the second section piece (5).

3. Seal according to Claim 1, **characterized in that** the third section piece (10) is one with the second section piece (5).

4. Seal according to one of Claims 1 to 3, **characterized in that** the second section piece (5) and the third section piece (7, 10) are formed by coextrusion with the first section piece (1).

5. Seal according to Claim 1, **characterized in that** the third section piece (11) is a tubular member manufactured independently of the second section piece (5) and engaged inside the latter.

6. Seal according to one of Claims 1 to 5, **characterized in that** the source of pressurized fluid provides this fluid at a pressure which increases with the speed of the vehicle.

7. Seal according to one of Claims 1 to 6, **characterized in that** the fluid under pressure is a gas, particularly air.

8. Seal according to one of Claims 1 to 6, **characterized in that** the fluid under pressure is a liquid, particularly glycol water.

## Patentansprüche

1. Dichtung für eine Öffnungsumrandung einer Kraftfahrzeug-Karosserie, wobei die Dichtung ein U-förmiges Klemmteil bildendes erstes Profil (1) aus Elastomer oder aus Plastomer umfasst, das geeignet ist, unter Festklemmen an einem vorspringenden Teil der Öffnungsumrandung diesen zu überdecken, und ein zweites Profil (5) aus einem weichen, elastisch verformbaren Material, wobei dieses zweite Profil an die Außenfläche der Basis oder eines der Arme des ersten Profils anstößt und an ihm alleine oder mit dem Teil des ersten Profils, an den es anstößt, ein rohrförmiges Organ bildet, wobei wenigstens eine Öffnung (6) eine Kommunikation zwischen dem Innenraum und dem Außenraum des zweiten Profils herstellt, welches dazu bestimmt ist, zur Sicherstellung der Dichtigkeit auf Umrandungsebene in der Schließposition des mit der Karosserieöffnung verbundenen Öffners durch diesen komprimiert zu werden, wobei die Dichtung **dadurch gekennzeichnet ist, dass** im Inneren des zweiten Profils (5) ein drittes Profil (7, 10, 11) aus einem weichen, elastisch verformbaren Material angeordnet ist, das an das erste Profil (1) oder an das zweite Profil (5) anstößt oder nicht und das alleine oder mit dem Teil des ersten und/oder des zweiten Profils, an den es anstößt, ein dichtes rohrförmiges Organ bildet, das an eine Druckfluidquelle angeschlossen ist und in der Lage ist, unter der Belastung durch dieses Fluid mit der Innenfläche des zweiten Profils (5), in dem es angeordnet ist, in Kontakt zu gelangen, um die Dichtigkeit und Schalldämmung der Dichtung zu verbessern, wenn sich das Fahrzeug mit einer hohen Geschwindigkeit bewegt, wobei dieses dritte Profil aus einem sehr weichen und sehr nachgiebigen Material gebildet ist, das es ihm erlaubt, sich unter einem schwachen Überdruck auszudehnen, um mit dem zweiten Profil, in dem es angeordnet ist, in Kontakt zu gelangen.

2. Dichtung nach Anspruch 1, **dadurch gekennzeichnet, dass** das dritte Profil (7) nicht an das zweite Profil (5) anstößt.

3. Dichtung nach Anspruch 1, **dadurch gekennzeichnet, dass** das dritte Profil (10) einen Körper mit dem zweiten Profil (5) bildet.

4. Dichtung nach einem der Ansprüche 1 bis 3, **dadurch gekennzeichnet, dass** des zweite Profil (5) und das dritte Profil (7, 10) mit dem ersten Profil (1) koextrudiert sind.

5. Dichtung nach Anspruch 1, **dadurch gekennzeichnet, dass** das dritte Profil (11) ein rohrförmiges Organ ist, das unabhängig von dem zweiten Profil (5) hergestellt und in dieses eingesetzt ist.

6. Dichtung nach einem der Ansprüche 1 bis 5, **dadurch gekennzeichnet, dass** die Druckfluidquelle das Fluid mit einem Druck liefert, der mit der Geschwindigkeit des Fahrzeugs zunimmt.

7. Dichtung nach einem der Ansprüche 1 bis 6, **dadurch gekennzeichnet, dass** das Druckfluid ein Gas ist, insbesondere Luft.

8. Dichtung nach einem der Ansprüche 1 bis 6, **dadurch gekennzeichnet, dass** das Druckfluid eine Flüssigkeit ist, insbesondere ein GlykolWasser-Gemisch.
